# EUROPÄISCHE PATENTANMELDUNG

(11) **EP 2 937 320 A1**
(43) Veröffentlichungstag der Anmeldung: **28.10.2015**
(21) Anmeldenummer: 14165724.7
(22) Anmeldetag: 24.04.2014
(51) Int. Cl.: C04B 20/12, C04B 28/14, C04B 28/10, B01J 20/04, B01J 20/18, B01J 20/16, B01J 20/32, C04B 111/00

(54) **Verfahren zur Herstellung eines Sorptions-Wärmespeichers**

(71) Anmelder: Paltentaler Minerals GmbH & Co KG, 8903 Lassing bei Selzthal (AT)
(72) Erfinder: Henninger, Stefan, 79346 Endingen (DE); Römer, Andreas, 2620 Hafning (AT)
(74) Vertreter: Burger, Hannes

(57) **Zusammenfassung**

Die Erfindung betrifft ein Verfahren zur Herstellung eines Sorptions-Wärmespeichers durch Mischen eines porösen Adsorptionsmittels mit zumindest einem Salz, wodurch das poröse Adsorptionsmittel mit dem zumindest einem Salz beladen und mit zumindest einem Hydrophobierungsmittel hydrophobiert wird.

## Beschreibung

Die Erfindung betrifft ein Verfahren zur Herstellung eines Sorptions-Wärmespeichers durch Mischen eines porösen Adsorptionsmittels mit zumindest einem Salz, wodurch das poröse Adsorptionsmittel mit dem zumindest einem Salz beladen wird. Weiter betrifft die Erfindung einen Sorptions-Wärmespeicher umfassend ein poröses Adsorptionsmittel, das mit zumindest einem Salz zumindest teilweise beladen ist. Zudem betrifft die Erfindung die Verwendung des Sorptions-Wärmespeichers.

Zur Speicherung von Wärme sind aus dem Stand der Technik unterschiedlichste Systeme bekannt, beispielsweise Latentwärmespeicher oder thermochemische Wärmespeicher. Insbesondere im Zusammenhang mit erneuerbaren Energien, wie z.B. Sonnenenergie, rückt das Thema Wärmespeicherung vermehrt in den Vordergrund. Übliche Warmwasserspeicher scheiden für eine Langzeitspeicherung von Wärme aus, sodass also vermehrt auf alternative Systeme zurückgegriffen wird. Hier bieten sich die beiden voranstehend genannten Methoden zur Wärmespeicherung an, da damit die Verluste minimiert werden können.

Im Bereich der thermochemischen Wärmespeicher ist es bereits bekannt, Zeolithe zur Wärmespeicherung über einen Desorptions-Adsorptionsprozess von Wasser einzusetzen. Bei natürlichem Zeolith liegt der Wasseraufnahmegehalt bei ca. 12 Gew.-%, bei synthetischem Zeolith hingegen bei bis zu ca. 30 Gew.-%, sodass rein aus dieser Sicht einem synthetisch hergestelltem Zeolith der Vorzug zu geben ist. Allerdings haben synthetisch hergestellte Zeolithe den Nachteil, dass sie im Vergleich zu natürlichen Zeolithen deutlich teurer sind.

Um den Wasseraufnahmegehalt eines Zeolith zu steigern, kann dieser mit einer Salzlösung getränkt werden. Beispielsweise beschreibt die EP 2 163 520 A1 die Herstellung eines imprägnierten Zeoliths durch Herstellen einer wässrigen Lösung eines hygroskopischen Mineralsalzes mit einer Dehydratisierungsenthalpie von mindestens 1200 kJ/kg und anschließendes Imprägnieren eines Zeoliths mit dieser wässrigen Lösung. Danach wird der imprägnierte Zeolith getrocknet.

Es besteht jedoch das Problem, das bei den Trocknungs- und Befeuchtungsvorgängen das Salz aus den Poren des Zeoliths "ausgewaschen" wird und verklumpt, wodurch es zu Leistungsminderungen bzw. zum Ausfall des Systems kommt.

Der vorliegenden Erfindung liegt die Aufgabe zu Grunde, einen verbesserten Sorptions-Wärmespeicher zur Verfügung zu stellen.

Diese Aufgabe wird bei dem eingangs genannten Verfahren zur Herstellung eines Sorptions-Wärmespeichers dadurch gelöst, dass das mit dem zumindest einen Salz beladene poröse Adsorptionsmittel mit zumindest einem Hydrophobierungsmittel hydrophobiert wird. Weiter wird die Aufgabe mit dem eingangs genannten Sorptions-Wärmespeicher gelöst, bei dem das mit dem zumindest einen Salz beladene poröse Adsorptionsmittel mit zumindest einem Hydrophobierungsmittel hydrophobiert ist.

Es kann damit ein verbessertes Sorptionsmaterial zur Wärmespeicherung, Wärmetransformation oder Entfeuchtung zur Verfügung gestellt werden. Von Vorteil ist dabei, dass durch die Hydrophobierung von salzbehandelten porösen Adsorptionsmitteln dauerhaft gewährleistet werden kann, dass die Salze homogen auf dem porösen Adsorptionsmittel verteilt sind und bleiben und zudem diese nicht in Lösung und damit aus dem porösen Adsorptionsmittel ausgewaschen werden können. Überraschenderweise wurde festgestellt, dass trotz Hydrophobierung keine (wesentliche) Verschlechterung der Wasseraufnahme während der Entladung des Wärmespeichers auftritt. Durch die aufgebrachte Hydrophobierung wird der Wasserdampftransport nicht (wesentlich) behindert, sodass weiterhin die Aufnahme von beispielsweise Wasser aus der Gasphase in einem Adsorptionsprozess stattfinden kann. Es kann also mit dem Verfahren ein Sorptions-Wärmespeicher zur Verfügung gestellt werden, der um einen langen Zeitraum seine Leistungsfähigkeit beibehält. Darüber hinaus wird durch die Vermeidung der Freisetzung der teils aggressiven Salze aus dem porösen Adsorptionsmittel der Vorteil erreicht, das nicht nur sehr teure, nicht korrosive Metalle, wie z.B. Edelstahl, für die Aufnahme des beladenen Zeoliths zum Einsatz kommen können, wodurch das Wärmespeichersystem insgesamt kostengünstiger wird. Es ist damit beispielsweise möglich, das Sorptionsmaterial auch in offenen Klimalüftungssystemen einzusetzen.

Gemäß einer Ausführungsvariante des Verfahrens ist vorgesehen, dass das zumindest eine Salz in Form einer Salzlösung eingesetzt wird. Es wird damit eine homogenere Verteilung des zumindest einen Salzes in den Poren des porösen Adsorptionsmittels erreicht.

Es ist weiter bevorzugt, dass das mit dem zumindest einen Salz beladene poröse Adsorptionsmittel vor der Hydrophobierung getrocknet wird, um damit die Leistungsfähigkeit des Sorptions-Wärmespeichers zu verbessern.

Obwohl auch körnige poröse Adsorptionsmittel eingesetzt werden können, wird vorzugsweise das mit dem zumindest einen Salz beladene poröse Adsorptionsmittel vor der Hydrophobierung gemahlen. Es kann damit der Hydrophobierungsgrad der anschließenden Hydrophobierung des beladenen Adsorptionsmittels verbessert werden. Zudem kann damit auch die Oberfläche des hydrophobierten Adsorptionsmittels vergrößert werden, wodurch die Leistungsfähigkeit des Sorptions-Wärmespeichers verbessert werden kann.

Als Salz für die Beladung des porösen Adsorptionsmittels kann prinzipiell jedes hygroskopische Salz verwendet werden. Vorzugsweise wird das zumindest eine Salz jedoch ausgewählt aus einer Gruppe bestehend aus Halogeniden und Sulfaten, insbesondere Halogenide und Sulfate der Alkali- und Erdalkalimetalle, da damit die Leistungsfähigkeit des Sorptions-Wärmespeichers verbessert werden kann.

Aus dem selben Grund wird das poröse Adsorptionsmittel bevorzugt mit einem Anteil an dem zumindest einen Salz beladen, der ausgewählt wird aus einem Bereich von 5 Gew.-% bis 50 Gew.-%. Unterhalb von 5 Gew.-% wird zwar noch eine Verbesserung der Wasseraufnahmefähigkeit des Sorptions-Wärmespeichers erreicht, allerdings ist der Aufwand in der Herstellung des Sorptions-Wärmespeichers im Vergleich zum Nutzen zu hoch. Mit einem Salzanteil von mehr als 50 Gew.-% konnte beobachtet werden, dass trotz Hydrophobierung eine zumindest teilweise Überladung bzw. Verklumpung der Salzkomponente des Sorptions-Wärmespeichers auftritt. Darüber hinaus kann bei einem Salzanteil von mehr als 50 Gew.-% das Salz pur neben dem Zeolith vorliegen, d.h. dass der Zeolith nur mit einem Teil des Gesamtanteils des Salzes beladen ist.

Besonders bevorzugt wird als poröses Adsorptionsmittel ein Zeolith, insbesondere ein natürlicher Zeolith, eingesetzt. Wie im nachfolgenden noch näher beschrieben wird, kann mit diesem Adsorptionsmittel im Zusammenspiel mit dem zumindest einem Salz, das sich zumindest teilweise in den Hohlräumen sowie in der porösen Oberfläche des Zeoliths befindet, eine deutliche Verbesserung der Leistungsfähigkeit des Sorptions-Wärmespeichers erreicht werden.

Als natürlicher Zeolith kann jeder beliebige natürliche Zeolith genommen werden, vorzugsweise wird jedoch ein Klinoptilolith, Chabazit, Phillipsit, Natrolith, Erionit oder Mischungen daraus, besonders bevorzugt ein Klinoptilolith, verwendet. Es kann damit erreicht werden, dass die Sorptionsfähigkeit ausreichend erhalten bleibt. Dies ist umso erstaunlicher, als der Fachmann von der Hydrophobierung des natürlichen Zeoliths erwarten würde, dass die für die Aufrechterhaltung der Sorptionsfähigkeit erforderlichen Poren im Gefüge des nicht speziell angepassten Zeoliths zumindest teilweise verkleben oder verschlossen werden und damit ihre sorptiven Funktionen nicht mehr wahrnehmen könnte. Überraschenderweise zeigte sich jedoch, dass mit diesen natürlichen Zeolithen die Leistungsfähigkeit von synthetischen, mit Salzen beladenen und hydrophibierten Zeolithen zumindest annähernd erreicht wird. Dabei sind allerdings die Herstellungskosten des natürlichen Zeoliths deutlich geringer als jene von einem synthetischen Zeolith.

Vorzugsweise wird als Hydrophobierungsmittel ein Silan, insbesondere Octyltriethoxysilan oder Aminopropylsilan, eingesetzt. Es kann damit die Verfahrenstechnik vereinfacht werden, indem das Silan beispielsweise lediglich auf den Zeolith aufgesprüht wird, da die Hydrophobierung des Zeolith durch das Silan bereits innerhalb weniger Minuten eintritt. Neben dieser nassen Hydrophobierung kann das Silan aber auch trocken für die Hydrophobierung des Zeoliths eingesetzt werden. Zudem sind mit einem Silan hydrophobierte Zeolithe besser in andere Baustoffe, insbesondere silikatische Baustoffe, einmischbar, insbesondere dauerhaft, sodass der Sorptions-Wärmespeicher auch in großflächigen Anwendungen, wie z.B. auf Wänden, Decken, Böden, Fassaden, etc., eingesetzt werden kann.

Das mit dem zumindest einen Salz beladene poröse Adsorptionsmittel wird insbesondere mit mindestens 0,5 Gew.-% und maximal 8 Gew.-% Hydrophobierungsmittel versetzt, bezogen auf die Menge an Adsorptionsmittel. Unterhalb von 0,5 Gew.-% tritt der beabsichtigte Effekt nicht bzw. nicht im ausreichenden Maß in Erscheinung. Überraschenderweise zeigte sich, dass bei einem Hydrophobierungsgrad von über 8 Gew.-% die positive Wirkung des Hydrophobierungsmittels auf das mit dem Salz beladene Adsorptionsmittel nicht mehr wesentlich verändert wird. Allerdings verringern sich dann die sorptiven Eigenschaften des Sorptions-Wärmespeichers.

Es ist von Vorteil, wenn dem Silan Siloxanemulgatoren beigemengt sind, da in diesem Fall die Hydrophobierung gleichmäßiger erfolgt und je nach Menge des aufgebrachten Silans ein exakter Hydrophobierungsgrad des Zeoliths eingestellt werden kann. Siloxane besitzen auch die Fähigkeit zur Hydrophobierung und fördern somit auch die Hydrophobierung von Zeolith.

Bevorzugt wird der Sorptions-Wärmespeicher entsprechend dem voranstehend beschriebenen Verfahren bzw. einer Ausführungsvariante hiervon hergestellt.

Weiter betrifft die Erfindung die Verwendung des Sorptions-Wärmespeichers in einem Adsorptionsprozess oder in einem Wärmetransformationsprozess oder zur Entfeuchtung.

Zudem betrifft die Erfindung die Verwendung des Sorptions-Wärmespeichers in einem Putz zur Reduktion der Kondenswasserbildung an der Oberfläche (Entfeuchtung) und/oder Verhinderung einer Algen- und/oder Pilzbildung, bevorzugt in einem Außenputz oder einem Innenputz sowie die Verwendung als aktive Dämmung durch Verringerung der Temperaturdifferenz eines Gebäudes. Gleiches gilt auch im Innenbereich.

Zum besseren Verständnis der Erfindung wird diese anhand der nachfolgenden Figuren näher erläutert.

Es zeigen:
- Fig. 1: die Wasseraufnahmeisothermen von zwei Sorptions-Wärmespeichern bei 25 °C;
- Fig. 2: die Adsorptionscharakteristik von verschiedenen Adsorptionsmitteln;
- Fig. 3: die Zyklusstabilität eines Sorptions-Wärmespeichers.

Unter einem Sorptions-Wärmespeicher im Sinne der Erfindung wird ein partikelförmiges Adsorptionsmittel verstanden, dass in der Lage ist, Feuchtigkeit bzw. Wasser aufzunehmen und wieder abzugeben.

Der Sorptions-Wärmespeicher nach der Erfindung besteht bzw. umfasst ein partikelförmiges, poröses Adsorptionsmittel, das mit zumindest einem Salz beladen um mit zumindest einem Hydrophobierungsmittel hydrophobiert ist. Die Hydrophobierung erfolgt nach der Beladung des Adsorptionsmittels mit dem zumindest einen Salz.

Das partikelförmige, poröse Adsorptionsmittel ist insbesondere durch zumindest einen Zeolith gebildet. Es sind aber auch andere poröse Adsorptionsmittel verwendbar, insbesondere anorganische Adsorptionsmittel, wie z.B. Silikagele, Alumosilikate, Schichtsilikate, mesoporöse Silikate (MCM), Aktivkohle, metallorganische Adsorptionsmittel (MOF).

Als Zeolith kann im Prinzip jeder Zeolith verwendet werden, also sowohl synthetische als auch natürliche Zeolithe. Als synthetische Zeolithe können beispielsweise Linde Typ A Zeolith oder Zeolith ZSM 5 oder ALPO oder MeAPO eingesetzt werden. Vorzugsweise sollte der Zeolith genügend Porenraum aufweisen und noch nicht zu hydrophil sein.

Bevorzugt ist der eingesetzte Zeolith jedoch natürlichen Ursprungs, wie z.B. Phillipsit, Chabazit, Mordenit, Erionit, Heulandit, Klinoptilolith oder Natrolith. Insbesondere wird als poröses Adsorptionsmittel ein natürlicher Klinoptilolith, ein Chabazit, ein Phillipsit, ein Natrolith, ein Erionit oder eine Mischungen daraus eingesetzt. Besonders bevorzugt wird Klinoptilolith verwendet, da natürlicher Klinoptilolith bis zu 20% seines Gewichtes an Wasser aufnehmen kann, wobei nicht nur flüssiges Wasser, sondern auch Wasserdampf gebunden werden kann. Ein Großteil dieses Wassers kann in hydratisierter Form an die Kristallstruktur gebunden werden (Kristallwasser) und adsorptiv an die Oberfläche (und damit auch in die Poren) angelagert sein.

Die natürliche Form von Klinoptilolith und anderen natürlichen Zeolithen wird erhalten, indem das Mineral in Lagerstätten abgebaut, zerkleinert und gegebenenfalls getrocknet wird.

Der natürliche Zeolith weist vorzugsweise einen Zeolithgehalt von mindestens 50 Gew.-%, insbesondere mindestens 70 Gew.-% auf. Den Rest auf 100 Gew.-% bilden natürliche Beimengungen bzw. Begleitmineralien, wie z.B. Quarz, Feldspate, Smektit, Montmorillonit oder Christobalith oder anderen Mineralien. Wenn daher im Rahmen dieser Beschreibung ein Zeolith bzw. ein natürlicher Zeolith genannt wird, ist ein Adsorptionsmittel mit einem Zeolithgehalt von mindestens 50 Gew.-% gemeint.

Da Klinoptilolith sehr oft mit dem chemisch ähnlichen Mineral Heulandit vergesellschaftet ist, werden Gesteine mit einem Anteil von über 50% der Summe von Klinoptilolith und Heulandt ebenfalls der Einfachheit halber als natürlicher Klinoptilolith bezeichnet.

Neben im Sinne dieser Definition reinen Zeolithen bzw. tatsächlich reinen Zeolithen, d.h. Zeolithen die keine Begleitmineralien aufweisen, können für den Sorptions-Wärmespeicher auch Mischungen aus zumindest zwei verschiedenen Zeolithen eingesetzt werden.

Bekanntlich sind Zeolithe kristalline Alumosilikate mit einem Netzwerk aus SiO₄- und AlO₄-Tetraedem, die mit einem Sauerstoffatom am Eckpunkt des Tetraeders verbunden sind. Die Mikrostruktur der Zeolithe erlaubt die reversible Adsorption und Desorption von Wassermolekülen. Abhängig von der der Verbindung der Tetraeder weisen Zeolithe unterschiedlichste Strukturen mit Poren und Hohlräume in verschiedenen Größen auf.

Die thermochemische Wärmespeicherung auf Basis der exothermen Hydratation von entwässerten Salzhydraten besitzt den Vorteil einer einfacheren Materialherstellung bei großen Wärmespeichermengen und dadurch eines niedrigen Herstellungspreises. Durch die Hydratisierung des Salzes wird Wärme frei, die genutzt werden kann. Umgekehrt kann Wärme durch die Dehydratisierung des Salzes gespeichert werden. Die Entwässerung des Salzhydrates kann beispielsweise durch solare Wärme, die durch Solarkollektoren erzeugt werden kann, erfolgen. Es sind aber auch andere Wärmequellen einsetzbar, wie z.B. industrielle Abwärme, direkte Feuerung mit Gas, etc.

Der Sorptions-Wärmespeicher kann auch mehrere unterschiedliche poröse Adsorptionsmittel aufweisen, beispielsweise zwei oder drei oder vier, etc.

Das partikuläre Adsorptionsmittel weist vorzugsweise eine maximale Korngröße von 5 mm, insbesondere eine Korngröße zwischen 0,1 mm bis 5 mm, auf, wenn es mit dem Hydrophobierungsmittel versetzt wird. Die maximale Korngröße ist dabei definiert als der Durchmesser der das Partikel gerade einschließenden Hüllkugel. Insbesondere kann das Adsorptionsmittel eine Korngrößen-Verteilung aufweisen. Mögliche Korngrößen Verteilungen sind z.B.: 15 µm (d50), 50 µm (d50), 100 µm (d50), 0 mm bis 0,2 mm, 0,2 mm bis 1,0 mm, 1,0 mm bis 2,5 mm. 2,5 mm bis 5,0mm, sowie Kombinationen daraus.

Bei Verwendung von feinen Korngrößen aber auch bei Verwendung von groben Korngrößen besteht die Möglichkeit, dass das Adsorptionsmittel zu Adsorptionskörper verarbeitet wird, also beispielsweise in diverse Formen "gegossen" wird.

Um das Adsorptionsmittel auf die bevorzugte Korngröße einzustellen, können herkömmliche Verfahren, wie z.B. Brechen von Gestein, Sieben nach Korngrößenfraktionen, Mahlen, etc., angewandt werden. In dieser Korngröße kann das Adsorptionsmittel auch als Sorptions-Wärmespeicher verwendet werden. Durch die Einstellung dieser Korngröße des Adsorptionsmittels wird eine große Oberfläche für den Sorptions-Wärmespeicher zur Verfügung gestellt, wodurch dessen Leistungsfähigkeit verbessert werden kann.

Weiter ist bevorzugt, wenn das partikuläre Adsorptionsmittel mikroporös (Porengröße kleiner 0,2mm) oder mesoporös (Porengröße 0,5 nm bis 50 nm) oder makroporös (Porengröße größer 50 nm) entsprechend der IUPAC Nomenklatur ist, Besonders bevorzugt ist das partikuläre Adsorptionsmittel mikroporös bzw. mesoporös mit einem Porendurchmesser von bis zu 50 nm. Durch den Einsatz von einem Adsorptionsmittel mit Poren in dieser Größenordnung kann die Wasseraufnahmefähigkeit des Adsorptionsmittels durch Erhöhung der wirksamen Ober-fläche erreicht werden. Das Porenvolumen der Adsorptionsmittel-Partikeln kann dabei zwischen 0,05 cm³/g und 2 cm³/g betragen. Die Porenoberfläche kann zwischen 100 cm³/g und 4000 cm³/g betragen.

Die Porengrößenverteilung kann nach dem BET-Verfahren über das Modell von Barett, Joyner und Halenda (BHJ) bestimmt werden. Als Meßgerät kann das Coulter SA 3100 ^{®} verwendet werden. Es kann dazu die Stickstoff-Tieftemperatur-Adsorption nach DIN-ISO 9277 erfolgen. Ebenso kann ein Quecksilber-Porosimeter (Quecksilberintruison) im Hochdruck- oder Niederdruckverfahren eingesetzt werden.

Die Porositätsbestimmung kann durch Rein- und Rohdichtebestimmung nach DIN EN 12390-7 und DIN 52102 erfolgen.

Wie bereits voranstehend ausgeführt, wird das partikuläre, poröse Adsorptionsmittel mit zumindest einem Salz beladen. Es werden dazu hygroskopische Salze, insbesondere anorganische hygroskopische Salze, eingesetzt. Durch die Mitverwendung dieser Salze, können unterschiedliche Speicherdichten den jeweiligen Temperatur- bzw. Druckverhältnisse angepasst werden. Diese finden Verwendung u.a. in offenen bzw. geschlossenen Sorptions-Wärmespeichersystemen. Weiter können sie als Kurzzeitspeicher bis Langzeitspeicher ausgelegt werden. Beispielsweise kann durch die Wahl eines geeigneten Salzes mit den entsprechenden Hydratisierungsstufen gezielt die Wasseraufnahme bei der entsprechenden Temperatur/Feuchtigkeitsbedingungen eingestellt werden. Für die Verwendung als Sorptionsmittel können hierbei durch die Hydrophobierung sowohl die festen Zustände des Salzes aber auch insbesondere die Zustände gesättigter und ungesättigter Lösung genutzt werden. Hierbei erfolgt die Wasseranlagerung teilweise durch Physisorption in den Poren des Zeoliths gefolgt von der bzw. parallel zur Chemisorption durch Bildung von Hydraten und sobald die Soliduslinie überschritten wird durch Absorption im Bereich der ungesättigten Lösung. Abhängig vom verwendeten Salz sind verschiedene Hydratstufen beständig.

Prinzipiell können alle (anorganischen) hygroskopischen (löslichen) Salze verwendet werden. Beispiele hierfür sind Halogenide und Sulfate, wie z.B. Fe₂SO₄, FeCl₃, CuSO₄, CuCl₂, ZnSO₄, ZnCl₂, CoSO₄, CoCl, MnSO₄, MnCl, MgSO₄, AlCl₃, Al₂(SO₄)₃, etc..

Vorzugsweise wird zur Beladung des Adsorptionsmittels, insbesondere des (natürlichen) Zeoliths, jedoch zumindest ein Salz verwendet, das ausgewählt ist aus einer Gruppe bestehend aus Halogeniden und Sulfaten der Alkali- und Erdalkalimetalle, also z.B. MgCl₂, MgSO₄, CaCl₂, CaSO₄, LiCl, Li₂SO₄, NaCl, Na₂SO₄, usw..

Es können auch Mischungen von zumindest zwei Salzen, insbesondere der voranstehend genannten Salze, eingesetzt werden.

Das zumindest eine Salz wird dem partikulären, porösen Adsorptionsmittel bevorzugt in Form einer Salzlösung zugesetzt werden. Dazu wird das zumindest eine Salz in Wasser gelöst, und das Adsorptionsmittel mit dieser Salzlösung in Kontakt gebracht, sodass die Salzlösung in die Poren des Adsorptionsmittel eindringen kann, zumindest bis in Bereiche nahe der Oberfläche der Partikel des Adsorptionsmittels. Vorzugsweise werden dazu Salzlösungen verwendet, die eine Salzkonzentration bezogen auf das Salz ohne Kristallwasser zwischen 0,5 mol/l bis 18 mol/, beispielsweise zwischen 0,5 mol/l bis 11 mol/l oder zwischen. 2 mol/l bis 8,5 mol/l oder zwischen 1,5 mol/l bis 6,5 mol/l, aufweisen

Vorzugsweise wird das poröse Adsorptionsmittel mit einem Anteil an dem zumindest einen Salz beladen, der ausgewählt wird aus einem Bereich von 5 Gew.-% bis 50 Gew.-%, insbesondere aus einem Bereich von 20 Gew.-% bis 40 Gew.-%. Den Rest auf 100 Gew.-% bildet das zumindest eine Adsorptionsmittel. Der Beladungsgrad ist dabei bezogen auf die Gesamtmenge an Adsorptionsmittel mit Salz, also ohne Hydrophobierungsmittel.

Die Beladung des Adsorptionsmittels, insbesondere des Zeoliths, mit dem Salz kann bei Raumtemperatur (= 20 °C) oder bei erhöhter Temperatur zumindest der Salzlösung erfolgen, wobei in letzterem Fall die Temperatur zwischen 30 °C und 100 °C, insbesondere zwischen 40 °C und 80 °C, betragen kann.

Weiter kann die Beladung des Adsorptionsmittels, insbesondere des Zeoliths, mit dem Salz unter Normaldruck durchgeführt werden. Es ist aber auch möglich die Beladung unter Unterdruck oder Überdruck durchzuführen, wobei auch Druckwechselverfahren möglich sind.

Es ist weiter vorgesehen, dass das mit dem zumindest einen Salz beladene Adsorptionsmittel hydrophobiert wird. Durch die Hydrophobierung kann (dauerhaft) gewährleistet werden, dass das zumindest eine Salz homogen auf dem bzw. im Adsorptionsmittel verteilt ist sind und dieses während der Verwendung des Sorptions-Wärmespeichers nicht in Lösung geht und damit aus dem Adsorptionsmittel ausgewaschen wird.

Es können verschiedenste Hydrophobierungsmittel zur Hydrophobierung des Adsorptionsmittels eingesetzt werden, beispielsweise Wachse. Bei der Verwendung von Wachsen kann es jedoch zu Problemen in Hinblick auf den Brandschutz oder die Dauerhaftigkeit, wie z.B. die Witterungsbeständigkeit (UV-Beständigkeit, etc.) kommen, wenn der Sorptions-Wärmespeicher in Bauwerkstoffen, wie z.B. einem Putz, einer Spachtel, einem Mörtel einem _Estrich oder Beton, eingesetzt wird.

Nicht zuletzt aus diesem Grund wird als Hydrophobierungsmittel vorzugsweise ein Silan verwendet. Insbesondere wird ein Octyltriethoxysilan, wie z.B. Triethoxy(2,4,4-trimethylpentyl)silan, oder ein Aminopropylsilan eingesetzt, wobei auch andere Silane, wie z.B. hochalkylierte Silane, beispielsweise iso-Butyltriethoxysilan, verwendet werden können. Weitere Stoffe, wie sie in handelsüblichen Silanpräparaten oft enthalten sind, beeinträchtigen nicht deren erfindungsgemäßen Einsatz. Beispielsweise werden einige Silanpräparate vor der Anwendung mit Wasser oder anderen Lösungsmitteln verdünnt.

Das mit dem zumindest einen Salz beladene poröse Adsorptionsmittel wird insbesondere mit einem Anteil an Hydrophobierungsmittel versetzt, der mindestens 0,5 Gew.-% und maximal 8 Gew.-%, vorzugsweise zwischen 3,5 Gew.-% und 4 Gew.-%, beträgt, bezogen auf die Menge an Adsorptionsmittel in dem Sorptions-Wärmespeicher.

Die Hydrophobierung erfolgt insbesondere mit einem flüssigen Hydrophobierungsmittel. Dazu können übliche Verfahren verwendet werden, beispielsweise kann das mit dem Salz beladenen Adsorptionsmittel mit dem Hydrophobierungsmittel besprüht werden. Andere Verfahren sind selbstverständlich auch verwendbar, wie beispieslweise die bevorzugte Hydrophobierung in Lösung. Dazu wird das Adsorptionsmittel mit der Salzlösung versetzt und vor dem Trocknen hydrophophiert. Gegebenenfalls kann das beladene, hydrophobierte Adsorptionsmittel danach vermahlen werden..

Es kann das mit dem zumindest einen Salz beladene poröse Adsorptionsmittel aber auch vor der Hydrophobierung getrocknet werden. Die Trocknung kann bis zu einem Restfeuchtegehalt erfolgen, die abhängig ist vom verwendeten Salz, da sich manche Anhydrite nicht mehr auflösen.. Zur Trocknung selbst können wiederum bekannte Verfahren bzw. Vorrichtungen verwendet werden. Beispielsweise kann die Trocknung mittels Heißluft oder mittels Infrarotstrahlung, etc. erfolgen. Bevorzugt beträgt die Temperatur während der Trocknung zwischen 40 °C und 130 °C. Die Trocknung kann über einen Zeitraum zwischen 5 Stunden bis 24 Stunden durchgeführt werden. Unterstützend kann die Trocknung auch bei Unterdruck erfolgen, wenngleich die Normaldruckvariante bevorzugt wird.

Es kann weiter vorgesehen werden, dass das mit dem zumindest einen Salz beladene poröse Adsorptionsmittel vor der Hydrophobierung zur Korngrößen(verteilungen) entsprechend den voranstehend genannten Angaben gemahlen wird.

Es ist von Vorteil, wenn dem Hydrophobierungsmittel, insbesondere dem Silan, zumindest ein Siloxanemulgator beigemengt sind, da in diesem Fall die Hydrophobierung gleichmäßiger erfolgt und je nach Menge des aufgebrachten Hydrophobierungsmittels ein exakter Hydrophobierungsgrad des Adsorptionsmittels, insbesondere des Zeoliths, eingestellt werden kann. Siloxane besitzen auch die Fähigkeit zur Hydrophobierung und fördern somit auch die Hydrophobierung des Adsorptionsmittels. Als Siloxan wird bevorzugt Polydimethylsiloxan eingesetzt.

Der Anteil an dem zumindest einen Siloxan kann zwischen 0,5 Gew.-% und 8 Gew.-%, insbesondere zwischen 3,5 Gew.-% und 4 Gew.-%, bezogen auf den Gesamtanteil an Hydrophobierungsmittel und Siloxan, betragen.

In der einfachsten Ausführungsvariante besteht also der Sorptions-Wärmespeicher aus dem zumindest einem partikulären, porösen Adsorptionsmittel, dem zumindest einem Salz und dem Hydrophobierungsmittel. Zudem kann der Sorptions-Wärmespeicher zumindest ein Siloxan aufweisen.

Zur Herstellung des Sorptions-Wärmespeichers kann das zumindest eine partikuläre, poröse Adsorptionsmittel mit zumindest einer Salzlösung versetzt werden. Nach der Salzbeladung des Adsorptionsmittels kann dieses getrocknet und gegebenenfalls gemahlen werden. Danach erfolgt die Hydrophobierung des beladenen Adsorptionsmittels mit zumindest einem Hydrophobierungsmittel durch Vermischung des beladenen Adsorptionsmittels mit dem zumindest einem Hydrophobierungsmittels (fest/flüssig Mischung). Dabei kann das hydrophobierte partikelfömige, poröse Adsorptionsmittel beispielsweise durch einfaches Besprühen mit einem handelsüblichen Hydrophobierungsmittel, insbesondere einem organischen Silanpräparat für bauchemische Zwecke, während gleichzeitiger Umwälzung des besprühten Pulvers zum Zwecke der Durchmischung erzeugt werden. Die Umwälzung hat so zu erfolgen, dass die Sprühflüssigkeit einen möglichst großen Teil des Pulvers benetzt und dadurch die Hydrophobierung der pulverförmigen Adsorptionsmittelfläche bewirkt. Anstatt des pulverförmigen Adsorptionsmittels kann auch ein gekörntes Adsorptionsmittel eingesetzt werden.

Im Zuge der Erprobung des Sorptions-Wärmespeichers wurden folgende Untersuchungen durchgeführt.

Eine Probe Klinoptilolithpulver mit Korngrößen zwischen 0 und 50 Mikrometer wurde mit einer Calciumdichloridlösung versetzt. Die CaCl₂-Lösung wies eine Konzentration von 4 mol/l auf. Die Beladung des Zeoliths erfolgte während einer Zeitspanne von 5 Minuten bis 30 Minuten durch Mischen des Zeoliths in der Lösung. Die Temperatur der CaCl₂-Lösung betrug 25 °C bis 30 °C. Die Beladung erfolgt unter Normaldruck. Danach wurde der beladene Zeolith bis zu einer Restfeuchte von ≤ 0,5 Gew.-% getrocknet. Aufgrund der kleinen Korngrößen des eingesetzten Zeoliths war eine weitere Vermahlung nicht erforderlich.

Es wurden auf diese Weise zwei Proben hergestellt, nämlich eine Probe A, die einen CaCl₂-Anteil von 25 Gew.-% im Klinoptilolith aufwies, und eine Probe B, die einen CaCl₂-Anteil von 30 Gew.-% im Klinoptilolith aufwies.

Die beladenen Zeolithproben A und B wurden nach dem Trocknen durch Besprühung und gleichzeitiger Durchmischung mit einer 80 %-igen Lösung aus Triethoxy(2,4,4-trimethylpentyl)silan und Polydimethylsiloxan silanisiert. Der Summenanteil an Silan und Siloxan betrug nach der Silanisierung 4Gew.-% für die Probe A und 4 Gew.-% für die Probe B, jeweils bezogen auf die Menge an eingesetztem Klinoptilolith ohne Salzbeladung.

Die Bestimmung der Wasseraufnahmefähigkeit der beiden Proben A und B erfolgte sowohl volumetrisch als auch thermogravimetrisch.

Die volumetrischen Messungen wurden in einem Quantachrome Hydrosorb der Fa. Quantachrome Instruments unter reinem Wasserdampf durchgeführt. Vor der Messung wurden die Proben A und B unter Vakuum bei 120 °C für 24 Stunden getrocknet. Die Bestimmung der Isothermen erfolgte bei einer Badtemperatur von 25 °C.

Die thermogravimetrischen Messungen wurden mit einem Setaram SetSys Evolution und Setaram TG-DSC 111 der Fa. Setaram durchgeführt (Wasserdampfgenerator WetSys, Ar als Trägergas). Vor den Messungen wurden die Proben bei 140 °C unter reiner Ar-Atmosphäre getrocknet. Die Zyklusstabilität der Proben A und B wurde anhand kontinuierlichem Aufheizen und Abkühlen der Proben zwischen 140 °C und 40 °C unter mit Wasserdampf versetzter Ar-Atmosphäre (relative Luftfeuchtigkeit: 76,3 %) getestet.

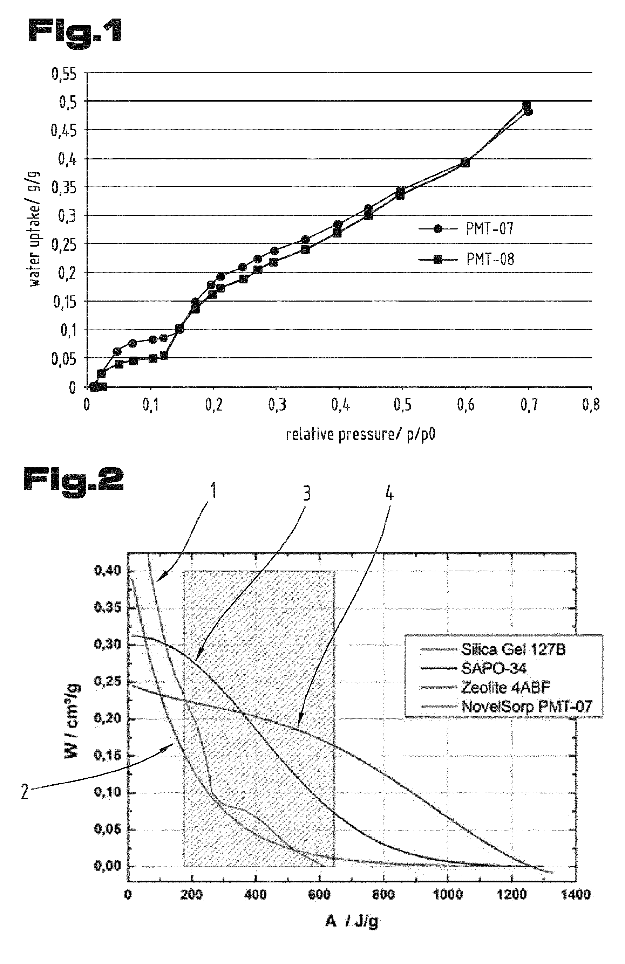

Fig. 1 zeigt die gemessenen Adsorptionsisothermen der beiden Proben A (Kreise) und B (Quadrate). Dabei sind auf der Abszisse der relative Druck (p/p0) und auf der Ordinate die Wasseraufnahme in g Wasser/g Sorptions-Wärmespeicher aufgetragen. Wie aus Fig. 1 ersichtlich ist, zeigen beide Proben A und B ein Maximum der Wasseraufnahme von ungefähr 0,5 g/g Sorptions- Wärmespeicher. Im Vergleich dazu weist ein herkömmlicher, aus dem Stand der Technik bekannter Sorptions-Wärmespeicher auf Zeolithbasis (synthetisch hergestellter Faujasit) eine Wasseraufnahmevermögen von maximal 0,3 g/g auf. Der Sorptions-Wärmespeicher nach der Erfindung zeigt also eine deutliche Verbesserung des Wasseraufnahmevermögens.

Interessanterweise weist die Probe A mit 25 Gew.-% CaCl₂ im unteren Bereich der Isotherme eine geringfügig höhere Wasseraufnahmefähigkeit auf, als die Probe B mit dem höheren Anteil an CaCl₂. Es wird vermutet, dass hier die Adsorption des natürlichen Zeoliths noch dominierend ist. Da bei höheren CaCl₂ Anteilen die Poren jedoch nahezu voll belegt sind, besteht damit kein freier Adsorptionsplatz mehr. Bei geringeren CaCl₂ Anteilen gibt es allerdings noch freies Porenvolumen, welches dann von Wasser besetzt werden kann.

Um das Potential des Sorptions-Wärmespeichers nach der Erfindung im Vergleich zu aus dem Stand der Technik bekannten Sorptions-Wärmespeichern zu zeigen, wurden die gemessenen Daten unterschiedlicher Sorptions-Wärmespeicher entsprechend der Dubinin Theorie transformiert. Es kann damit das adsorbierte Volumen an Wasser als Funktion des Adsorptionspotentials erhalten werden. Die Ergebnisse sind in Fig. 2 dargestellt. Dabei sind auf der Abszisse das Adsorptionspotential in J/g und auf der Ordinate das Wasservolumen in cm³ Wasser/g Sorptions-Wärmespeicher aufgetragen. Das Bezugszeichen 1 zeigt dabei den Verlauf der Probe A, das Bezugszeichen 2 jenen von Silica Gel 127B, das Bezugszeichen 3 jenen eines Zeolith 4ABF und das Bezugszeichen 4 jenen eines Zeolith SAPO-34.

Der grau markierte Bereich gibt das normale Arbeitsfenster wieder. Dieses ist wie folgt definiert. Das Minimum der Adsorptionsbedingungen korreliert mit einer Adsorptionstemperatur von 35 °C bei einem Dampfdruck im Verdampfer von 1,2 kPa. Dies ergibt ein Adsorptionspotential von 174 J/g. Das Maximum der Adsorptionsbedingungen ist definiert als Desorption des aufgenommenen Wassers bei 120 °C und einem Druck im Dampfkondensator von 5,6 kPa. Dies ergibt eine Adsorptionspotential von 645 J/g.

Innerhalb dieses Arbeitsfensters sollte das differentielle adsorbierte Volumen an Wasser zwischen Maximum und Minimum und damit die umgesetzte Wassermenge maximal sein. Wie aus Fig. 2 ersichtlich ist, zeigt der Zeolith 4ABF (Bezugszeichen 4) zwar ein hohes Aufnahmevermögen bei minimalem Adsorptionspotential, aber auch noch eine hohe Kapazität im Trocknungsfall bei dem höchsten Adsorptionspotential. Damit reduziert sich das in einem typischen Prozess umsetzbare Wasservolumen ca. 0,06 cm³/g.

Silica Gel (Bezugszeichen 2) ist zum Unterschied dazu zu wenig hydrophil, sodass das umgesetzte Wasservolumen nur ca. 0,15 cm³/g beträgt.

Der Zeolith SAPO-34 (Bezugszeichen 3) weist ein umsetzbares Wasservolumen von ca. 0,21 cm³/g. Dieser synthetische Zeolith ist jedoch sehr kostenintensiv, sodass dessen Anwendung in großen Mengen für einen Sorptions-Wärmespeicher industriell nicht in Frage kommt.

Im Vergleich dazu weist Probe A (Bezugszeichen 1) ebenfalls ein umsetzbares Wasservolumen von ca. 0,22 cm³/g auf. Die Herstellungskosten sind jedoch deutlich geringer als jene von SAPO-34.

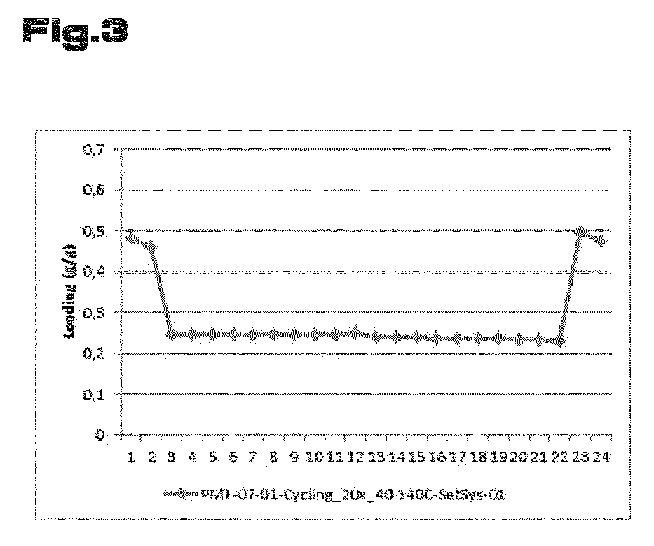

Weiter wurde die Zyklusstabilität des Sorptions-Wärmespeichers nach der Erfindung untersucht. Das Ergebnis für Probe A ist in Fig. 3 dargestellt. Dabei sind auf der Abszisse die Anzahl der Zyklen und auf der Ordinate die Beladung in g Wasser/g Probe A aufgetragen.

Die Probe A wies nach 20 Be- und Entladezyklen keine kritischen Veränderungen bzw. Degenerierungen auf. Im Zuge dieses Tests wurde die Probe A einem hydrothermalen Stress durch wiederholtes Aufheizen auf 140 °C und Abkühlen auf 40 °C bei einem Wasserdampfdruck von 5,6 kPa ausgesetzt. Vor und nach dieser Behandlung wurde jeweils die Wasseraufnahme im Gleichgewicht gemessen. Innerhalb der Zyklen wurde nicht auf die Einstellung des Gleichgewichtes gewartet, sondern eine fixe Zeit (eine Stunde, Temperaturanstieg 10 °C/min) für die Wasseraufnahme vorgegeben. Aus diesem Grund weichen die beiden ersten und die beiden letzten Werte im in Fig. 3 dargestellten Verlauf von den anderen Werten ab. Die Gleichgewichtswerte wurden als Referenzwerte gemessen. Wie aus Fig. 3 ersichtlich ist, ändern sich die Werte für die Wasseraufnahme weder im Verlauf der fixen Zeitspannen noch nach Gleichgewichtseinstellung (Vergleich Anfang zu Ende des Gesamtzykluses).

Der Sorptions-Wärmespeicher kann auch in einer Außenfassade bzw. einem Außenputz verwendet werden. Der Begriff "Außen" ist dabei dem allgemeinen Sprachgebrauch entsprechend verwendet, also für Fassaden bzw. Putze, die der Bewitterung ausgesetzt sind.

Durch das Einbringen des (stark) wasserbindenden Zeolith kann die Betauuung einer hochgedämmten Außenfassade und damit ein mögliches Algenwachstum verhindert werden. Der wie voranstehend ausgeführt behandelte Zeolith nimmt bei niedrigen Temperaturen und hohen Feuchten diese auf und wärmt gleichzeitig die Fassade. Dadurch kann über einen gewissen Zeitraum die Betauung bzw. die Wasserbildung auf der Außenseite verhindert werden. Bei anschließender Sonneneinstrahlung und Erwärmung wird das Wasser dann wieder an die Außenluft abgegeben.

Der behandelte Zeolith nach der Erfindung kann weiterhin als aktive Dämmung bzw. Klimatisierung ausgenutzt werden. Während die bislang eingesetzten Dämmstoffe auf eine Verringerung der Wärmeleitung ausgelegt sind, kann durch den Einsatz des Zeolithen die Dämmwirkung durch eine Verringerung der treibenden Temperaturdifferenz erzielt werden. So nimmt der Zeolith bei niedrigen Temperaturen mehr Wasserdampf aus der Umgebung auf und erwärmt sich dadurch gleichzeitig. Dieser Effekt kann für die zeitliche Verschiebung ausgenutzt werden, beispielsweise in Klimaten die sich durch eine hohe Temperaturspreizung zwischen Tag und Nacht auszeichnen. So wird eine Auskühlung des Gebäudes durch eine Wasserdampfaufnahme und damit die Erwärmung in der Nacht aktiv verhindert. Am Tag wiederum bei hoher Sonneneinstrahlung wird die Außenfassade erwärmt und damit der Wasserdampf wieder ausgetrieben. Hierbei kühlt sich die Fassade ab.

Die Ausführungsbeispiele beschreiben mögliche Ausführungsvarianten des Sorptions-Wärmespeichers, wobei an dieser Stelle bemerkt sei, dass auch diverse Kombinationen der einzelnen Ausführungsvarianten untereinander möglich sind. Gleiches gilt für den Innen- und Außenbereich.

### Bezugszeichenaufstellung

- 1: Probe A
- 2: Silika Gel 127B
- 3: SAPO-34
- 4: Zeolith 4ABF

## Patentansprüche

1. Verfahren zur Herstellung eines Sorptions-Wärmespeichers durch Mischen eines porösen Adsorptionsmittels mit zumindest einem Salz, wodurch das poröse Adsorptionsmittel mit dem zumindest einem Salz beladen wird, **dadurch gekennzeichnet, dass** das mit dem zumindest einen Salz beladene poröse Adsorptionsmittel mit zumindest einem Hydrophobierungsmittel hydrophobiert wird.

2. Verfahren nach Anspruch 1, **dadurch gekennzeichnet, dass** das zumindest eine Salz in Form einer Salzlösung eingesetzt wird.

3. Verfahren nach Anspruch 1 oder 2, **dadurch gekennzeichnet, dass** das mit dem zumindest einen Salz beladene poröse Adsorptionsmittel vor der Hydrophobierung getrocknet wird.

4. Verfahren nach einem der Ansprüche 1 bis 3, **dadurch gekennzeichnet, dass** das mit dem zumindest einen Salz beladene poröse Adsorptionsmittel vor der Hydrophobierung gemahlen wird.

5. Verfahren nach einem der Ansprüche 1 bis 4, **dadurch gekennzeichnet, dass** das zumindest eine Salz ausgewählt wird aus einer Gruppe bestehend aus Halogeniden und Sulfaten, insbesondere Halogenide und Sulfate der Alkali- und Erdalkalimetalle.

6. Verfahren nach einem der Ansprüche 1 bis 5, **dadurch gekennzeichnet, dass** das poröse Adsorptionsmittel mit einem Anteil an dem zumindest einen Salz beladen wird, der ausgewählt wird aus einem Bereich von 5 Gew.-% bis 50 Gew.-%.

7. Verfahren nach einem der Ansprüche 1 bis 6, **dadurch gekennzeichnet, dass** als poröses Adsorptionsmittel ein Zeolith, insbesondere ein natürlicher Zeolith, eingesetzt wird.

8. Verfahren nach Anspruch 7, **dadurch gekennzeichnet, dass** als Zeolith ein natürlicher Klinoptilolith, ein Chabazit, ein Phillipsit, ein Natrolith, ein Erionit oder Mischungen daraus eingesetzt wird.

9. Verfahren nach einem der Ansprüche 1 bis 8, **dadurch gekennzeichnet, dass** als Hydrophobierungsmittel ein Silan eingesetzt wird.

10. Verfahren nach Anspruch 9, **dadurch gekennzeichnet, dass** als Silan ein Octyltriethoxysilan oder ein Aminopropylsilan eingesetzt wird.

11. Verfahren nach Anspruch 9 oder 10, **dadurch gekennzeichnet, dass** dem Silan ein Siloxan, vorzugsweise Polydimethylsiloxan, zugesetzt wird.

12. Verfahren nach einem der Ansprüche 1 bis 11, **dadurch gekennzeichnet, dass** das mit dem zumindest einen Salz beladene poröse Adsorptionsmittel mit mindestens 0,5 Gew.-% und maximal 8 Gew.-% Hydrophobierungsmittel versetzt wird, bezogen auf die Menge an Adsorptionsmittel.

13. Sorptions-Wärmespeicher umfassend ein poröses Adsorptionsmittel, das mit zumindest einem Salz zumindest teilweise beladen ist, **dadurch gekennzeichnet, dass** das mit dem zumindest einen Salz beladene poröse Adsorptionsmittel mit zumindest einem Hydrophobierungsmittel hydrophobiert ist.

14. Sorptions-Wärmespeicher nach Anspruch 13, **dadurch gekennzeichnet, dass** dieser entsprechend einem Verfahren nach einem der Ansprüche 1 bis 12 hergestellt ist.

15. Verwendung eines Sorptions-Wärmespeichers hergestellt nach einem Verfahren nach einem der Ansprüche 1 bis 12 in einem Adsorptionsprozess oder in einem Wärmetransformationsprozess oder zur Entfeuchtung.

16. Verwendung eines Sorptions-Wärmespeichers hergestellt nach einem Verfahren nach einem der Ansprüche 1 bis 12 in einem Putz zur Entfeuchtung und Verhinderung einer Algen-und/oder Pilzbildung, bevorzugt in einem Außenputz oder einem Innenputz.

17. Verwendung eines Sorptions-Wärmespeichers hergestellt nach einem Verfahren nach einem der Ansprüche 1 bis 12 als aktive Dämmung durch Verringerung der Temperaturdifferenz eines Gebäudes.
